# EUROPÄISCHE PATENTSCHRIFT

(11) **EP 2 503 894 B1**
(45) Veröffentlichungstag und Bekanntmachung des Hinweises auf die Patenterteilung: **25.01.2017**
(21) Anmeldenummer: 10778668.3
(22) Anmeldetag: 19.11.2010
(51) Int. Cl.: A23L 7/104, A21D 2/02, A21D 8/04, A21D 10/00, A21D 13/00

(54) **VERFAHREN ZUR HERSTELLUNG VON BACKWAREN**
METHOD FOR PRODUCING BAKED GOODS
PROCÉDÉ POUR FABRIQUER DES PRODUITS DE BOULANGERIE

(30) Priorität: 25.11.2009 EP 09177062
(43) Veröffentlichungstag der Anmeldung: 03.10.2012
(73) Patentinhaber: BASF SE, 67056 Ludwigshafen am Rhein (DE)
(72) Erfinder: DIENER, Ralf, 67435 Neustadt (DE); SCHNEIDER, Jürgen, 67273 Bobenheim am Berg (DE); NEUMANN-LIEDEMIT, Claudia, 69151 Neckargemünd (DE); STEFAN, Madalina Andreea, 83308 Trostberg (DE); BORGMEIER, Frieder, 68163 Mannheim (DE)
(74) Vertreter: BASF IP Association
(86) Internationale Anmeldenummer: PCT/EP2010/067814
(87) Internationale Veröffentlichungsnummer: WO 2011/064146

(56) Entgegenhaltungen:
- EP-A2- 0 214 707
- GB-A- 342 657
- US-A- 3 149 979
- US-A1- 2005 118 322
- US-A1- 2007 042 080
- AMREIN T M ET AL: "Acrylamide in gingerbread: critical factors for formation and possible ways for reduction." JOURNAL OF AGRICULTURAL AND FOOD CHEMISTRY, Bd. 52, Nr. 13, 2004, Seiten 4282-4288, XP002613725
- HENDRIKSEN H V ET AL: "Evaluating the potential for enzymatic acrylamide mitigation in a range of food products using an asparaginase from Aspergillus oryzae" JOURNAL OF AGRICULTURAL AND FOOD CHEMISTRY, Bd. 57, Nr. 10, 27. März 2009 (2009-03-27), Seiten 4168-4176, XP002575849 AMERICAN CHEMICAL SOCIETY, US ISSN: 0021-8561 DOI: 10.1021/JF900174Q [gefunden am 2009-04-23]
- CIESAROVÁ Z ET AL: "Improvement of Cereal Product Safety by Enzymatic Way of Acrylamide Mitigation" CZECH JOURNAL OF FOOD SCIENCE, PRAGUE, CZ, Bd. 27, Nr. Special Issue 1, 1. Januar 2009 (2009-01-01), Seiten S96-S98, XP009142294 ISSN: 1212-1800
- DATABASE FSTA [Online] INTERNATIONAL FOOD INFORMATION SERVICE (IFIS), FRANkFURT-MAIN, DE; 2004, WEISSHAAR R: "Acrylamide in bakery products - results from model experiments." XP002613726 Database accession no. FS-2004-09-Ma1638 & WEISSHAAR R.: "Acrylamide in bakery products - results from model experiments." DEUTSCHE LEBENSMITTEL-RUNDSCHAU, Bd. 100, Nr. 3, 2004, Seiten 92-97, GERMANY
- LEVINE R A ET AL: "Sources of variability of acrylamide levels in a cracker model." JOURNAL OF AGRICULTURAL AND FOOD CHEMISTRY, Bd. 53, Nr. 11, 2005, Seiten 4410-4416, XP002622633 AMERICAN CHEMICAL SOCIETY DOI: 10.1021/JF047887T
- SADD P A ET AL: "Effectiveness of methods for reducing acrylamide in bakery products." JOURNAL OF AGRICULTURAL AND FOOD CHEMISTRY, Bd. 56, Nr. 15, 2008, Seiten 6154-6161, XP002622634 AMERICAN CHEMICAL SOCIETY DOI: 10.1021/JF7037482

## Beschreibung

Die vorliegende Erfindung betrifft ein Verfahren zur Herstellung von Backwaren, das dadurch gekennzeichnet ist, dass eine Mischung bestehend aus mindestens einem Backtriebmittel und mindestens einer Substanz ausgewählt aus der Gruppe bestehend aus Sulfite, Hydrogensulfite und Disulfite bei der Herstellung des Backwarenteigs verwendet wird. Ferner betrifft die vorliegende Erfindung eine Mischung bestehend aus mindestens einem Backtriebmittel und mindestens einer Substanz ausgewählt aus der Gruppe bestehend aus Sulfite, Hydrogensulfite und Disulfite. Ferner betrifft die vorliegende Erfindung die Verwendung von einer Mischung, bestehend aus mindestens einem Backtriebmittel und mindestens einer Substanz, ausgewählt aus der Gruppe bestehend aus Sulfite, Hydrogensulfite und Disulfite in Backprozessen, sowie die Verwendung von Sulfiten und / oder Disulfiten zur Reduktion von Acrylamid in Lebensmitteln wie im Anspruch definiert. Seit Menschengedenken spielen kohlenhydratreiche Nahrungsmittel für die Ernährung der Weltbevölkerung eine wichtige Rolle. Backwaren, wie beispielsweise Brot, Brötchen, Knäckebrot, Brezeln, Kuchen, Honigkuchen, Lebkuchen, Spekulatius, Kekse, Waffeln, Schokoriegel, Kräcker, Salzstangen oder ähnliches, erfreuen sich auf allen Erdteilen großer Beliebtheit. Obwohl diese kohlenhydratreichen Nahrungsmittel seit jeher einen bedeutsamen Bestandteil der menschlichen Nahrung ausmachen, wurde erst kürzlich entdeckt, dass diese Nahrungsmittel Acyrlamid enthalten (J. Agric. Food Chem., 2002, 50, 4998-5006).

Es wird beschrieben, dass Acrylamid vornehmlich aus der Aminosäure Asparagin und reduzierenden Zuckern wie Traubenzucker, vorzugsweise bei hohen Temperaturen und geringem Wassergehalt entsteht.

Acrylamid ist als canzerogen beschrieben worden. Ein eindeutiger Zusammenhang zwischen der Acrylamidbelastung im menschlichen Körper und dem Ernährungsverhalten konnte jedoch ebenso wenig hergestellt werden, wie zwischen der Acrylamidaufnahme und der Wahrscheinlichkeit einer Krebserkrankung (Deutsches Ärzteblatt 102, Ausgabe 39, 30.09.2005, Seiten A-2640 f.; American Chemical Society, Proceedings of the symposium, "Chemistry and Toxicology of Acrylamide", 21.08.2007).

Trotz des fehlenden wissenschaftlichen Beweises einer gesundheitlichen Beeinträchtigung durch den Verzehr von acrylamidaufweisenden Lebensmitteln, wurde ein europaweites Programm zur Reduktion des Acyrlamids in Lebensmitteln ins Leben gerufen. Die beschriebenen Signalwerte liegen Signalwert für Spekulatius bei 416 µg/kg und für Lebkuchen bei 1000 µg/kg Acrylamid pro kg Backware.

Seit der ersten Veröffentlichung des Acrylamidgehalt in Lebensmitteln wurde dieses Themengebiet intensiv beforscht. Im Fokus der Forschung stand zum einen die Verminderung der Aminosäure Asparagin und zum anderen eine Minimierung der Acrylamidkonzentration.

Es wurde herausgefunden, dass Acrylamid vornehmlich entsteht, wenn getreidehaltiges Lebensmittel trocken über 180°C erhitzt wird. Die Acrylamidbildung beginnt bereits bei 120°C, steigt aber bei 170-180°C sprunghaft an. In vielen Fällen kann somit bereits die Acrylamidbildung durch eine Absenkung der Temperatur und/oder durch eine erhöhte Feuchte reduziert werden. Ferner lässt sich die Acrylamidbildung durch eine Verringerung des pH-Werts minimieren.

Es wird beschrieben, dass der Gehalt an Asparagin beim Backvorgang beispielsweise dadurch reduziert werden kann, indem der Weizen, aus dem das Mehl gewonnen wird, mit Sulfatdünger behandelt wurde. Ferner lässt sich eine Reduktion der Acrylamidbildung durch Einsatz von Wein- oder Zitronensäure erreichen. Des weiteren kann eine Reduktion durch Verminderung des Zuckergehalts oder durch Ersatz des Invertzuckers durch Rohrzucker erzielt werden.

Viele der genannten Möglichkeiten zur Minimierung der Acrylamidbildung sind leider aufgrund der bestehenden Backwarenrezepturen nicht realisierbar.

Es wurde ferner festgestellt, dass das verwendete Backtriebmittel einen Einfluss auf die Acrylamidkonzentration hat. Backtriebmittel werden typischerweise eingesetzt, um die Konsistenz von Backwaren zu verbessern. Diese Backtriebmittel setzen bei der Einwirkung von Wärme gasförmige Produkte frei, die eine Auflockerung des Teiges bewirken sollen.

Ammoniumhydrogencarbonat, auch als Ammoniumbicarbonat bekannt, und Hirschhornsalz, welches aus Ammoniumhydrogencarbonat und Ammoniumcarbamat/Ammoniumcarbonat besteht, sind seit Jahren als Backtriebmittel bekannt. Sie zerfallen beim Backvorgang (etwa bei 60 °C) vollständig in die gasförmigen Produkte Ammoniak, CO₂ und Wasser, ohne dabei geschmacksbeeinträchtigende Rückstände zu hinterlassen. Ammoniumhydrogencarbonat zeichnet sich dabei durch eine hohe Triebkraft aus und wirkt sich vorteilhaft auf Farbe, Geschmack und Konsistenz der Backware aus.

Weitere anorganische Backtriebmittel sind Kaliumcarbonat (Pottasche) und Natriumhydrogencarbonat (Natron), die jedoch mit Säureträgern wie Na₂H₂P₂O₇ oder Ca(H₂P₂O₄)₂ und Trennmitteln wie Stärke kombiniert werden sollten.

Durch den Ersatz des klassischen Backtriebmittels Ammoniumhydrogencarbonat durch alternative Backtriebmitteln wie Natriumbicarbonat oder Natriumhydrogencarbonat konnte die Acrylamidbildung zwar reduziert werden, allerdings ist dieser Austausch mit Veränderungen im Geschmack und in der Konsistenz der Backware verbunden. Ferner müssten die in Backstuben häufig zum Einsatz kommenden Backstrassen umgerüstet werden, da nun zusätzlich zu dem Backtriebmittel ein saures Aktivierungsmittel und darüber hinaus ein Trennmittel zugegeben werden müsste.

Folglich besteht ein großes Interesse der Bäckereien daran, weiterhin Ammoniumhydrogencarbonat als Backtriebmittel einsetzen zu können und die Bildung von Acrylamid auf anderem Wege zu minimieren.

US 2007/042080 A1 beschreibt, dass zu einem Vorteig einer Backware unter anderem Backpulver und verschiedene Mengen Aspergillus niger asparaginase zugegeben werden.

R.A. Levine, R.E. Smith, J. Agric. Food Chem. 2005, 53,4410-4416 beschreiben die Acylamidbildung und - eliminierung bei der Herstellung von "Crackern" unter anderem durch Zugabe von 1g "sodium bisulphite" zu Weizenmehl und Wasser.

US 2005/118322 A1 beschreibt die Zugabe von "sodium sulfite" zu fertigen "potatoe flakes" und deren anschließendes Erhitzen.

WO 2004/32648 offenbart, dass die Bildung von Acrylamid bei der Erwärmung eines Kohlenhydrate, Proteine und Wasser enthaltende Masse reduziert werden kann, wenn die Masse vor der Erwärmung mit einem Enzym behandelt wird. Es wird beschrieben, dass das Enzym der Masse durch Mischen oder Kneten zugesetzt wird. Das Enzym kann in Form einer wässrigen Lösung, eines Pulvers, eines Granulates oder eines agglomerierten Pulvers zugesetzt werden. Als Enzym wird vorteilhaft Asparaginase verwendet. Als wichtige Anwendungsgebiete werden u. a. Pommes Frites, Kartoffelchips, Knäckebrot, Müsli etc. genannt.

WO 2004/26043 offenbart ebenfalls eine Zugabe von Asparaginase zur Masse vor einer Erwärmung zur Reduktion von Acrylamidbildung. Es wird beschrieben, dass das Enzym Asparaginase in verschiedenster Form und an verschiedenen Prozessstufen der Masse zugesetzt werden kann. Das Enzym kann in Form eines Pulvers oder als Lösung eingesetzt werden. Als Hauptanwendungsgebiete werden Pommes Frites, sowie Kartoffel-, Mais oder Tortilla Chips genannt.

Nachteilig am Einsatz der Asparaginase ist, dass deren Herstellung kostenintensiv ist. Asparaginase ist ferner nicht im gewünschten Maße lagerstabil und lässt sich darüber hinaus nur unter hohem Aufwand eine stabile Mischung der Asparaginase mit den anderen Teigkomponenten erzielen.

Ou et al. offenbaren, dass NaHSO₃, CaCl₂ oder L-Cystein die Bildung von Acyrlamid bei der Herstellung von Pommes Frites verringert. Es wird beschrieben, dass die Pommes Frites vor dem Frittieren in eine Lösung enthaltend NaHSO₃, CaCl₂ oder L-Cysteine getränkt wurden.

Das Institut für Lebensmittel- und Umweltforschung e.V. offenbart, dass sich durch Zugabe von Kalium- oder Natriumchlorid der Acrylamidgehalt in Backwaren signifikant reduzieren lässt. Allerdings würde die erforderliche Menge an Kalium- oder Natriumchlorid den Geschmack der Lebensmittel beeinträchtigen.

Die genannten Möglichkeiten sind für die Anwendung bei der Herstellung von Backwaren kostenintensiv, da diese eine zusätzliche Zugabe, bzw. Dosierung des acrylamidreduzierenden Zusatzes bedeuten würden.

Es besteht demnach ein großes Interesse daran, die Zugabe eines acrylamidreduzierenden Zusatzes zum Teig einer Backware in das Verfahren zur Herstellung dieser Backwaren zu integrieren, ohne eine separate/weitere Zudosierung und somit ohne weitere Prozessstufen einzuführen und ohne die Komplexität der Backprozesses erhöhen zu müssen.

Eine weitere Zudosierung würde bei dem Verfahren zur Herstellung von Backwaren zu einer erhöhten Verwechslungsgefahr führen. Die Dosierung und Zugabe der jeweiligen Teigzutaten wird üblicherweise von ungelerntem Personal, bestenfalls von einem Bäckermeister vorgenommen. Für ein chemisch ungeschultes Auge sind die acrylamidreduzierenden Substanzen allerdings den weiteren Teigkomponenten wie Backtriebmittel, Mehl, Zucker oder Salz sehr ähnlich. Es besteht somit die Befürchtung, dass der Ausschluss an produzierter Backware aufgrund des komplexeren Backvorgangs steigt.

Die Aufgabe der vorliegenden Erfindung war demnach, eine Zugabeform der acrylamidreduzierenden Substanz zu finden, die die Komplexität des Verfahrens zur Herstellung von Backwaren nicht erhöht, ferner sich ohne Prozessänderung in eine Backstrasse integrieren lässt. Ferner sollten die arcylamidreduzierende Zusätze vor dem Erwärmen des Teig homogen in der Teigmasse vorliegen.

Eine weitere Aufgabe der vorliegenden Erfindung war es, alternative acrylamidreduzierende Substanzen zur Asparaginase aufzuzeigen.

Überraschenderweise wurde gefunden, dass ein Verfahren zur Herstellung von Backwaren, das dadurch gekennzeichnet ist, dass eine Mischung bestehend aus mindestens einem Backtriebmittel und mindestens einer Substanz ausgewählt aus der Gruppe bestehend aus Sulfite, Hydrogensulfite und Disulfite bei der Herstellung des Backwarenteigs verwendet wird, geeignet ist, acrylamidarme Backwaren herzustellen ohne die Komplexität des Backprozesses zu erhöhen.

Die Bezeichnung "Backware" soll jedes aus Teig hergestellte Produkt, beispielsweise von weicher oder knuspriger Konsistenz einschließen. Beispiele für Backwaren vom weißen, hellen oder dunklen Typ, die zweckmäßigerweise erfindungsgemäß hergestellt werden können, sind Brot, Brötchen, Knäckebrot, Brezeln, Kuchen, Honigkuchen, Lebkuchen, Spekulatius, Kekse, Waffeln, Schokoriegel, Kräcker, Salzstangen oder ähnliches.

Bevorzugt betrifft die vorliegende Erfindung die Herstellung von Knäckebrot, Lebkuchen, Spekulatius, Kräcker, Sesamstangen und Schokoriegel.

Bei der Verwendung dieser Mischung bestehend aus mindestens einem Backtriebmittel und mindestens einer Substanz ausgewählt aus der Gruppe bestehend aus Sulfite, Hydrogensulfite und Disulfite braucht der Bäcker keine Änderungen an seinem ausgeübten Backverfahren vorzunehmen. Die genannte Mischung kann analog dem konventionell verwendeten Backtriebmittel eingesetzt werden. Die erzielte Reduktion der Acrylamidbildung ist vergleichbar mit der getrennten Dosierung der Substanz und Backtriebmittel.

Die Mischung bestehend aus Backtriebmittel und Substanz ausgewählt aus der Gruppe bestehend aus Sulfite, Hydrogensulfite und Disulfite weist vorteilhaft Gewichtsverhältnis von Backtriebmittel zu Sulfite, Hydrogensulfite, Disulfite von 200:1 bis 1:10, bevorzugt von 100:1 bis 1:2, insbesondere bei 20:1 bis 1:1 auf.

Die genannten Sulfite, Hydrogensulfite, Disulfite sind kommerziell erhältlich.

Bevorzugt werden als acrylamidreduzierenden Substanz Alkali- und/oder Erdalkali-Sulfite, Hydrogensulfite- und/oder Disulfite eingesetzt. Besonders bevorzugt werden Alkali- und/oder Erdalkali-Sulfite, und/oder Disulfite eingesetzt. Insbesondere werden Natrium- und/oder Kalium- Sulfite und/oder Disulfite eingesetzt. Ganz besonders bevorzugt sind Natriumsulfit und/oder Natriumdisulfit.

Das Backtriebmittel enthält mindestens ein Carbonat. Als Carbonat wird oder werden solche Carbonate gewählt, deren Verwendung in Nahrungsmitteln unbedenklich ist und die ebenso wie ihre Zersetzungsprodukte nicht zu unangenehmen Geschmack der fertigen Backwaren führen. Geeignete Carbonate, die einzeln oder im Gemisch enthalten sind, sind dem Fachmann bekannt und typischerweise werden Alkalicarbonate und -hydrogencarbonate, insbesondere Natriumcarbonat, Natriumhydrogencarbonat, Kaliumcarbonat und Kaliumhydrogencarbonat sowie Ammoniumcarbonat und Ammoniumhydrogencarbonat verwendet.
Ebenso geeignet ist das üblicherweise als "Hirschhornsalz" bezeichnete Gemisch aus Ammoniumcarbonat und Ammoniumhydrogencarbonat, das zusätzlich auch Ammoniumcarbamat enthalten kann.

Vorzugsweise ist das Carbonat Ammoniumhydrogencarbonat und/oder Ammoniumcarbonat. Besonders bevorzugt ist das Carbonat Ammoniumhydrogencarbonat (auch Ammoniumbicarbonat genannt).

Die mittleren Partikeldurchmesser der eingesetzten Carbonate liegen im Allgemeinen bei 50 bis 1000 µm, vorzugsweise bei 75 bis 700 µm, bevorzugt bei 150 bis 500 µm. Der Partikeldurchmesser der Substanz ausgewählt aus der Gruppe bestehend aus Sulfite, Hydrogensulfite und Disulfite wird vorteilhaft so gewählt, dass sich eine stabile Mischung mit dem oder den jeweiligen Backtriebmittel(n) ergibt.

Wahlweise enthält das Backtriebmittel zusätzlich ein oder mehrere Carbamat(e). Als Carbamat wird oder werden solche Carbamate gewählt, deren Verwendung in Nahrungsmitteln unbedenklich ist und die ebenso wie ihre Zersetzungsprodukte nicht zu unangenehmen Geschmack der fertigen Backwaren führen. Ein geeignetes Carbamat ist beispielsweise Ammoniumcarbamat.

Falls das Backtriebmittel Carbamat enthält, beträgt die Menge an Carbamat vorzugsweise 10 bis 90 Gew.-%, bezogen auf die Gesamtmenge des Backtriebmittels, bevorzugt 30 bis 70 Gew.-%, insbesondere ca. 50% Gew.-%. Das Gemisch aus gleichen Teilen Ammoniumcarbamat und Ammoniumbicarbonat wird auch als Ammoniumcarbonat bezeichnet.

Wenn das eingesetzte Backtriebmittel Komponenten enthält, die sich beim Erwärmen auf typische Backtemperaturen von beispielsweise 100 bis 200 °C nicht oder nicht ausreichend zersetzen, enthält das Backtriebmittel zusätzlich eine Säure oder einen Säurebildner. Die Säure oder der Säurebildner ist eine für diesen Verwendungszweck bekannte Verbindung oder Verbindungsgemisch, beispielsweise Kalium-, Natrium-, Kaliumhydrogen- und/oder Calciumtartrat, Citronensäure, Calciumhydrogenphosphat, Natriumhydrogenpyrophosphat und/oder Natriumaluminiumphosphat. Falls das Backtriebmittel Säure oder Säurebildner enthält, beträgt die Menge an Säure oder Säurebildner vorzugsweise so viel, wie zur Umsetzung des Backtriebmittels und damit zur Freisetzung von Kohlendioxid benötigt wird. Je nach Säurestärke, Anzahl der Protonen pro Molekül und Molgewicht der Säure und des Backtriebmittels kann diese Menge stark unterschiedlich sein. Als Beispiel gilt bei Verwendung von Natriumbicarbonat und für gebräuchliche Säureträger ein Bereich von 60 bis 250 Gew.-%, bezogen auf die Gesamtmenge des Backtriebmittels, bevorzugt 75 bis 225 Gew.-%.

Wenn das Backtriebmittel eine Säure oder einen Säurebildner enthält, wird ihm vorzugsweise auch ein Trennmittel zugegeben, das die vorzeitige Kohlendioxidbildung durch Reaktion des Carbonats mit der Säure oder dem Säurebildner verhindert. Derartige Trennmittel sind bekannt, bevorzugt sind Mehl und/oder Stärke.

Die mittleren Partikeldurchmesser der eingesetzten Säuren oder Säurebilder liegen im allgemeinen bei 50 bis 1000 µm, vorzugsweise bei 75 bis 700 µm, bevorzugt bei 150 bis 500 µm.

Die genannten Carbonate, Carbamate, Säuren oder Säurenbildner, sowie Trennmittel sind kommerziell erhältlich.

Das Verfahren zur Herstellung der Backtriebmittel ist dem Fachmann seit langem bekannt. Beispielsweise werden Ammoniumverbindungen wie Ammoniumcarbonat, - bicarbonat und -carbaminat durch Umsetzung von den entsprechenden Mengen Ammoniak, typischerweise 10 bis 20 %, und im Überschuss zugegebenen Kohlendioxid, typischerweise 30 bis 65 % in wässriger Mutterlauge, bei dem entsprechenden Druck, typischerweise 1 bis 6 bar und Temperatur, typischerweise 30 bis 65 °C gefolgt von Kristallisation, Abtrennung und Trocknung des Niederschlags hergestellt.

Eine detaillierte Beschreibung der Herstellung von Backtriebmitteln findet sich beispielsweise in Ullmann's Encyclopedia of Industrial Chemistry, 2008 Edition.

Das Backtriebmittel kann außerdem ein oder mehrere Enzyme enthalten. Beispiele für Enzyme sind Cellulase, Lactase, Hemicellulase, Pentosanase, Glucoseoxidase (die zur Festigung des Teiges geeignet ist), Lipase (die zur Modifizierung von im Teig vorhandenen Lipiden geeignet ist, so dass der Teig weich wird), Peroxidase (die zur Verbesserung der Teigkonsistenz nützlich ist), Protease (die zur Gluten-Abschwächung geeignet ist), Peptidase und/oder Amylase, z.B. α-Amylase (die zur Bereitstellung von Hefe-fermentierbaren Zuckern geeignet ist).

Die Enzym-Bestandteile sind vorzugsweise mikrobiellen Ursprungs und können durch herkömmliche Verfahren erhalten werden.

Abgesehen von Enzym-Bestandteilen kann das Backtriebmittel auch weitere, üblicherweise verwendete Additive oder Hilfsstoffe enthalten, z.B. ein oder mehrere der folgenden Bestandteile: Milchpulver (das eine gewünschte Krustenfarbe liefert), Gluten (zur Verbesserung der Gasretentionskraft von kleberarmem Mehl), einen Emulgator (zur Verbesserung der Teig-Dehnfähigkeit und der Konsistenz des resultierenden Brotes), ein Fettgranulat (zur Teig- und Konsistenzerweichung des Brotes), ein Oxidationsmittel (zur Festigung der Gluten-Struktur; z.B. Ascorbinsäure, Kaliumbromat, Kaliumiodat oder Ammoniumpersulfat), Aminosäuren (z.B. Cystein), Zucker und Salze (z.B. Natriumchlorid, Calciumacetat, Natriumsulfat oder Calciumsulfat; zur Verfestigung des Teiges).

Beispiele für geeignete Emulgatoren sind Mono- oder Diglyceride, Diacetylweinsäureester von Mono- oder Diglyceriden, Zuckerester von Fettsäuren, Polyglycerinester von Fettsäuren, Milchsäureester von Monogylceriden, Essigsäureester von Monoglyceriden, Polyoxyethylenstearate, Phospholipide und Lecithin.

Die Mischung bestehend aus mindestens einem Backtriebmittel und mindestens einer Substanz, die die Bildung von Acrylamid minimiert, wird typischerweise in einer Menge von 0,1 bis 5 Gew.-%, bezogen auf den gesamten entstehenden Teig, bevorzugt 0,5 bis 2 Gew.-%, insbesondere ca. 1 Gew.-% zudosiert.

Der Teig setzt sich typischerweise aus einer Stärkequelle wie Mehl und/oder Kartoffelstärke, eine Proteinquelle wie Eiweiß, häufig Fette wie Butter, Öl und/oder Margarine, und meist weitere Zutaten wie Zucker, Salz, Backtriebmittel, Gewürze, Früchte oder ähnliches zusammen.

Grundlage des Teiges und/oder der hergestellten Backware ist typischerweise z.B. ein Weizenmehl oder Feinmehl, gegebenenfalls in Kombination mit anderen Mehl- oder Feinmehl-Typen, wie Maismehl, Roggenmehl, Roggen-Feinmehl, Hafermehl oder Hafer-Feinmehl, Sojamehl, Hirsemehl oder Hirse-Feinmehl, Kartoffelmehl oder Kartoffel-Feinmehl.

Üblicherweise wird die Menge an Backtriebmittel so gewählt, dass pro 100 g der eingesetzten Stärkequelle (z. B. Mehl und/oder Kartoffelstärke) vorteilhaft 1,5 bis 3,5 g Gase (Kohlendioxid, Ammoniak und/oder Wasserdampf), bevorzugt 2 bis 3 g Gase, insbesondere 2,35 bis 2,85 g Gase entwickelt werden.

Werden unporösere Backwaren hergestellt, ist die Menge entsprechend zu verringern; und für porösere entsprechend zu erhöhen.

Neben dem Backtriebmittel können weitere Zutaten verwendet werden, die ebenfalls zu Porosität in den erzeugten Backwaren führen, beispielsweise Hefe und/oder Sauerteig, ebenso kann die Porosität durch Einblasen von Gasen wie Luft in den Teig oder durch Untermischen von aufgeschäumten oder aufgeschlagenen Komponenten, wie beispielsweise Eiweiß, erhöht werden.

Ferner betrifft die vorliegende Erfindung eine Mischung bestehend aus mindestens einem Backtriebmittel und mindestens einer Substanz ausgewählt aus der Gruppe bestehend aus Sulfite, Hydrogensulfite undDisulfite.

Die allgemeinen Bevorzugungen im Bezug auf die Zusammensetzung der Mischung entsprechen den oben genannten.

Als Backtriebmittel wird bevorzugt Ammoniumhydrogencarbonat und/oder Ammoniumcarbonat verwendet. Besonders bevorzugt ist Ammoniumhydrogencarbonat.

Bevorzugt sind Alkali- und/oder Erdalkali-Sulfite und/oder Disulfite. Besonders bevorzugt werden Natrium- und/oder Kalium-Sulfite und/oder Disulfite eingesetzt. Ganz besonders bevorzugt sind Natriumsulfit und/oder Natriumdisulfit.

Die Mischung bestehend aus Backtriebmittel und Sulfite und/oder Disulfite liegt vorteilhaft in einem Gewichtsverhältnis Backtriebmittel zu Sulfite und/oder Disulfite von 200:1 bis 1:10, bevorzugt von 100:1 bis 1:2, insbesondere bei 20:1 bis 1:1.

Ferner betrifft die vorliegende Erfindung die Verwendung von einer Mischung bestehend aus mindestens einem Backtriebmittel und mindestens einer Substanz ausgewählt aus der Gruppe bestehend aus Sulfite, Hydrogensulfite undDisulfite in einem Verfahren zur Herstellung von Backwaren.

Die Bevorzugungen im Bezug auf die Zusammensetzung der Mischung entsprechen den oben genannten.

Ferner betrifft die vorliegende Erfindung die Verwendung von Sulfiten und/oder Disulfiten zur Reduktion von Acrylamid in Lebensmitteln wie im Folgenden definiert.

Die Sulfite und/oder Disulfite werden während der Herstellung des Lebensmittels zugegeben. Dies kann an allen dem Fachmann bekannten Prozessstufen stattfinden. Vorteilhaft findet die Zugabe vor dem Erwärmen des Lebensmittels statt.

Die Menge der Sulfite und/oder Disulfite, die dem Lebensmittel zugegeben werden, ist vom Lebensmittel abhängig und beträgt 0.001 bis 0.0001 kg pro kg Lebensmittel.

Der Vorteil des erfindungsgemäßen Verfahrens ist, dass eine, die Bildung von Acyrlamid minimierende, Substanz ohne Veränderung des Verfahrens zur Herstellung von Backwaren dem Backwarenteig zugesetzt werden kann. Somit wird eine Erhöhung der Komplexibilität des Verfahrens zur Herstellung von Backwaren vermieden und die damit verbundenen Fehlchargen aufgrund von Verwechslungen ausgeschlossen. Ferner ist eine homogene Verteilung dieser Substanz sichergestellt, da diese mit dem Backtriebmittel zugegeben wird und somit der gleichen bewährten homogenen Durchmischung für das Backtriebmittel unterliegt. Falls es dennoch zu einer unhomogenen Durchmischung kommt, würden Backwaren mit uneinheitlicher Porosität produziert, die sich bereits optisch von den gewünschten Backwaren unterscheiden. Solches Backwerk würde zwar einzelne sehr große Hohlräume, aber ansonsten überwiegend Bereiche mit unerwünscht niedriger Porosität enthalten, was das Backwerk hart und häufig auch unansehnlich macht. Wenn die großen Hohlräume an der Oberfläche des Backwerkes auftreten so wird beim Backprozess die dann dünne Teigschicht on der Oberseite wesentlich schneller fertig gebacken und die Backwaren weisen ferner dann eine unschöne dunkelbraune bis schwarze Verfärbung auf. Folglich kann alleinig aufgrund der optischen Bewertung der Backwaren ohne weitere Analyse festgestellt werden, ob eine homogene Verteilung erreicht wurde.

Ferner, da unter anderem die Backtriebmittel die Bildung von Acrylamid begünstigen, kann die Wirksamkeit der Substanz, die diese Bildung minimiert, durch die gemeinsame Zugabe mit dem Backtriebmittel in den Backwarenteig optimal genutzt werden.

### Beispiele

1. Einsatzstoffe für die Grundteige 1 und 2, die sich nur in der Weizenmehlcharge unterscheiden:
1,0 Kg Weizenmehl (405)
0,5 Kg Saccharose (Kristallzucker)
0,3 Kg Wasser

2. Durchführung:
Zucker wurde in Wasser gelöst und mit Mehl zu einem homogenen Grund-Teig verarbeitet. Die Additive (siehe Tabelle) wurden mit wenig Wasser angelöst und zu den jeweiligen Teigportionen zugegeben und nochmals ca. 20 min mit der Hand durchgeknetet. Nach Zugabe der Additive wurde der Teig in Aluminiumschälchen abgefüllt, um den Teig bei 40°C 22 h gehen zu lassen. Danach wurde der Teig für 30 min. bei 200°C gebacken. Der Gehalt an Acrylamid wurde anhand von GC-MS-Analytik gemessen.
Die Nachweisgrenze von Acrylamid liegt bei 30 µg/kg Teig.

3. Ergebnisse:

**Tabelle 1: Weizenmehl, Charge 1**

| Additive | Acrylamid-Bildung [µg/kg Teig] |
|---|---|
| 1 Gew.-% ABC | 270 |
| 1 Gew.-% ABC, 0,5 Gew.-% NaHSO₃ | 95 |

**Tabelle 2: Weizenmehl, Charge 2**

| Additive | Acrylamid-Bildung [µg/kg Teig] |
|---|---|
| 1 Gew.-% ABC | 48 |
| 1 Gew.-% ABC, 0,5 Gew.-% Na₂S₂O₅ | < 30 |
| 1 Gew.-% ABC, 0,1 Gew.-% Na₂S₂O₅ | < 30 |
| 1 Gew.-% ABC, 0,05 Gew.-% Na₂S₂O₅ | < 30 |
| 1 Gew.-% ABC, 0,1 Gew.-% Na₂SO₃ | < 30 |

## Patentansprüche

1. Verfahren zur Herstellung von Backwaren, **dadurch gekennzeichnet, dass** eine Mischung, bestehend aus mindestens einem Backtriebmittel und mindestens einer Substanz, ausgewählt aus der Gruppe, bestehend aus Sulfite, Hydrogensulfite und Disulfite bei der Herstellung des Backwarenteigs verwendet wird.

2. Verfahren nach Anspruch 1, **dadurch gekennzeichnet, dass** die Mischung ein Gewichtsverhältnis von Backtriebmittel zu Sulfite, Hydrogensulfite, Disulfite im Bereich von 200:1 bis 1:10 aufweist.

3. Verfahren nach Anspruch 1 oder 2, **dadurch gekennzeichnet, dass** die Mischung in einer Menge von 0,1 bis 5 Gew.-%, bezogen auf den gesamten entstehenden Backwarenteig eingesetzt wird.

4. Verfahren nach den Ansprüchen 1 bis 3, **dadurch gekennzeichnet, dass** eine Mischung aus mindestens einem Backtriebmittel und Natriumsulfit und/oder Natriumdisulft verwendet wird.

5. Verfahren nach Anspruch 4, **dadurch gekennzeichnet, dass** die Mischung aus Backtriebmittel und Natriumsulfit und/oder Natriumdisulfit ein Gewichtsverhältnis von Backtriebmittel zu Natriumsulfit und/oder Natriumdisulfit im Bereich von 20:1 bis 1:1 aufweist.

6. Verfahren nach den Ansprüchen 1 bis 5, **dadurch gekennzeichnet, dass** als Backtriebmittel Ammoniumbicarbonat verwendet wird.

7. Verfahren nach den Ansprüchen 1 bis 6, **dadurch gekennzeichnet, dass** als Backwaren Knäckebrot, Lebkuchen, Spekulatius, Kräcker, Sesamstangen und/oder Schokoriegel hergestellt werden.

8. Mischung, bestehend aus mindestens einem Backtriebmittel und mindestens einer Substanz, ausgewählt aus der Gruppe, bestehend aus Sulfite, Hydrogensulfite und Disulfite.

9. Mischung nach Anspruch 8, **dadurch gekennzeichnet, dass** als Backtriebmittel Ammoniumhydrogencarbonat verwendet wird und die Substanz ausgewählt ist aus der Gruppe bestehend aus Natrium- und/oder Kalium-Sulfite und/oder Disulfite, wobei die Mischung ein Gewichtsverhältnis von Backtriebmittel zu Natrium- und/oder Kalium-Sulfite und/oder Disulfite im Bereich von 20:1 bis 1:1 aufweist.

10. Verwendung von einer Mischung, bestehend aus mindestens einem Backtriebmittel und mindestens einer Substanz, ausgewählt aus der Gruppe, bestehend aus Sulfite, Hydrogensulfite und Disulfite in Backprozessen.

11. Verwendung von Sulfiten und/oder Disulfiten zur Reduktion von Acrylamid in Lebensmitteln, wobei die Sufite und/oder Disulfide während der Herstellung des Lebensmittels in einer Menge von 0,001 bis 0,0001 kg pro kg Lebensmittel zugegeben werden.

## Claims

1. A process for producing baked goods, which comprises using a mixture consisting of at least one baking raising agent and at least one substance selected from the group consisting of sulfites, bisulfites and metabisulfites in the production of the baked goods dough.

2. The process according to claim 1, wherein the mixture has a weight ratio of baking raising agent to sulfites, bisulfites, metabisulfites in the range from 200:1 to 1:10.

3. The process according to claim 1 or 2, wherein the mixture is used in an amount of 0.1 to 5% by weight, based on the total produced baked goods dough.

4. The process according to claims 1 to 3, wherein a mixture of at least one baking raising agent and sodium sulfite and/or sodium metabisulfite is used.

5. The process according to claim 4, wherein the mixture of baking raising agent and sodium sulfite and/or sodium metabisulfite has a weight ratio of baking raising agent to sodium sulfite and/or sodium metabisulfite in the range from 20:1 to 1:1.

6. The process according to claims 1 to 5, wherein the baking raising agent used is ammonium bicarbonate.

7. The process according to claims 1 to 6, wherein the baked goods produced are crispbread, gingerbread, spiced Spekulatius cookies, crackers, sesame sticks and/or chocolate bars.

8. A mixture consisting of at least one baking raising agent and at least one substance selected from the group consisting of sulfites, bisulfites and metabisulfites.

9. The mixture according to claim 8, wherein the baking raising agent used is ammonium hydrogencarbonate and the substance is selected from the group consisting of sodium and/or potassium sulfites and/or metabisulfites, wherein the mixture has a weight ratio of baking raising agent to sodium and/or potassium sulfites and/or metabisulfites in the range from 20:1 to 1:1.

10. The use of a mixture consisting of at least one baking raising agent and at least one substance selected from the group consisting of sulfites, bisulfites and metabisulfites in baking processes.

11. The use of sulfites and/or metabisulfites for decreasing acrylamide in foods, where the sulfites and/or metabisulfites are added during the production of the food in an amount of from 0.001 to 0.0001 kg per kg of food.

## Revendications

1. Procédé pour la préparation de produits de boulangerie, **caractérisé en ce qu'**un mélange, constitué par au moins un agent levant et au moins une substance choisie dans le groupe constitué par les sulfites, les hydrogénosulfites et les bisulfites, est utilisé lors de la préparation de la pâte des produits de boulangerie.

2. Procédé selon la revendication 1, **caractérisé en ce que** le mélange présente un rapport pondéral d'agent levant aux sulfites, hydrogénosulfites, bisulfites dans la plage de 200:1 à 1:10.

3. Procédé selon la revendication 1 ou 2, **caractérisé en ce que** le mélange est utilisé en une quantité de 0,1 à 5% en poids par rapport à la pâte des produits de boulangerie totale formée.

4. Procédé selon les revendications 1 à 3, **caractérisé en ce qu'**on utilise un mélange d'au moins un agent levant et de sulfite de sodium et/ou de bisulfite de sodium.

5. Procédé selon la revendication 4, **caractérisé en ce que** le mélange d'agent levant et de sulfite de sodium et/ou de bisulfite de sodium présente un rapport pondéral d'agent levant à sulfite de sodium et/ou bisulfite de sodium dans la plage de 20:1 à 1:1.

6. Procédé selon les revendications 1 à 5, **caractérisé en ce qu'**on utilise, comme agent levant, du bicarbonate d'ammonium.

7. Procédé selon les revendications 1 à 6, **caractérisé en ce qu'**on prépare, comme produits de boulangerie, du pain croustillant, du pain d'épice, du spéculoos, des crackers, des bâtonnets au sésame et/ou des barres chocolatées.

8. Mélange, constitué par au moins un agent levant et au moins une substance choisie dans le groupe constitué par les sulfites, les hydrogénosulfites et les bisulfites.

9. Mélange selon la revendication 8, **caractérisé en ce qu'**on utilise, comme agent levant, de l'hydrogénocarbonate d'ammonium et la substance est choisie dans le groupe constitué par les sulfites de sodium et/ou de potassium et/ou les bisulfites, le mélange présentant un rapport pondéral d'agent levant à sulfites de sodium et/ou de potassium et/ou bisulfites dans la plage de 20:1 à 1:1.

10. Utilisation d'un mélange, constitué par au moins un agent levant et au moins une substance choisie dans le groupe constitué par les sulfites, les hydrogénosulfites et les bisulfites dans des procédés de cuisson.

11. Utilisation de sulfites et/ou de bisulfites pour la réduction d'acrylamide dans des aliments, les sulfites et/ou les bisulfites étant ajoutés pendant la préparation de l'aliment en une quantité de 0,001 à 0,0001 kg par kg d'aliment.
